# EUROPEAN PATENT APPLICATION

(11) **EP 2 829 964 A1**
(43) Date of publication of application: **28.01.2015**
(21) Application number: 14172708.1
(22) Date of filing: 17.06.2014
(51) Int. Cl.: G06F 3/0485

(54) **Terminal device and screen switching method**

(30) Priority: 01.07.2013 JP 2013138436
(71) Applicant: FUJITSU LIMITED, Kawasaki-shi, Kanagawa 211-8588 (JP)
(72) Inventor: Takahashi, Yuji, Yokohama-shi Kanagawa 222-0033 (JP)
(74) Representative: Schultes, Stephan

(57) **Abstract**

A terminal device that includes a display controller that, when a normal slide operation is detected in a state in which a display section is displaying a scrollable screen, performs scroll display of the scrollable screen according to the normal slide operation; that, when a special slide operation has been detected, the special slide operation instructing a scroll amount to reach a non-displayed state screen for display by the display section, out of non-displayed state screens other than a displayed state screen of the scrollable screen that is being displayed by the display section, displays, amount identification information identifying the scroll amount instructed by the special slide operation; and that, when a screen switching condition is satisfied following on continuously from an instruction state of the special slide operation, displays, a non-displayed state screen identified by the scroll amount instructed by the special slide operation.

## Description

### FIELD

The embodiments discussed herein are related to a terminal device and a screen switching method.

### BACKGROUND

Terminal devices such as smartphones and tablets are provided with touch panel displays. In touch panel displays, in a state in which a screen capable of scroll display (referred to below as a "scrollable screen") is being displayed on the display, when a slide operation is performed to the touch panel, scroll display of the screen is performed according to the slide operation.

With scrollable screens, sometimes the user of a terminal device has to repeat a slide operation in order to display on the display a screen not currently being displayed in a display region of the display (referred to below as a "non-displayed state screen"). The number of slide operations involved in displaying the non-displayed state screen on the display increases the further the non-displayed state screen is from the screen that is currently being displayed in the display region of the display (referred to below as a "displayed state screen").

As technology to lessen the burden of slide operation, technology is known in which a position within a displayed state screen is specified, and scroll display of a scrollable screen is performed so as to eliminate a difference amount between the specified position and a reference position. Technology is also known in which a scroll amount is increased, or a scroll speed is increased, by performing a special slide operation following a slide operation to instruct a scroll direction. Moreover, technology is known in which plural raised portions are formed on a contacted face of a touch panel, and when a specific operation is detected as a finger is being dragged across the raised portions, jump scroll display is performed to a screen according to the position of the raised portions contacted by the finger. Note that jump scroll display refers to displaying a destination screen while suppressing display of screens present between the displayed state screen and the specified destination screen.

### [Related Patent Documents]

Japanese Patent Application Laid-Open (JP-A) No. H09-69037
JP-A No. 2012-141978
JP-A No. 2010-257039

However, in each of the technologies described above, sometimes a user has to perform an operation (such as a slide operation) several times on the touch panel, for scroll display or for jump scroll display, before a desired screen is displayed on the display.

### SUMMARY

Accordingly, it is desirable to reduce the effort involved in displaying a screen desired by a user on a scrollable screen.

According to one embodiment, a terminal device comprises: a detection section that detects a normal slide operation and a special slide operation at a touch panel; a display section that displays a scrollable screen; a display controller that, when the normal slide operation is detected in a state in which the display section is displaying the scrollable screen, performs scroll display of the scrollable screen according to the normal slide operation; that, when the special slide operation has been detected by the detection section, the special slide operation instructing a scroll amount to reach a non-displayed state screen for display by the display section, out of non-displayed state screens other than a displayed state screen of the scrollable screen that is being displayed by the display section, displays, at the display section, amount identification information identifying the scroll amount instructed by the special slide operation; and that, when a screen switching condition is satisfied following on continuously from an instruction state of the special slide operation, displays, at the display section, a non-displayed state screen identified by the scroll amount instructed by the special slide operation.

According to one embodiment, a screen switching method comprises: by a processor, detecting a normal slide operation and a special slide operation at a touch panel; by a processor, when the normal slide operation is detected in a state in which a display section that displays a scrollable screen is displaying the scrollable screen, performing scroll display of the scrollable screen according to the normal slide operation; when the special slide operation has been detected, the special slide operation instructing a scroll amount to reach a non-displayed state screen for display by the display section, out of non-displayed state screens other than a displayed state screen of the scrollable screen that is being displayed by the display section, displaying, at the display section, amount identification information identifying the scroll amount instructed by the special slide operation; and, when a screen switching condition is satisfied following on continuously from an instruction state of the special slide operation, displaying, at the display section, a non-displayed state screen identified by the scroll amount instructed by the special slide operation.

Embodiments can be implemented as computer-readable media carrying computer-readable instructions which, when executed by a processor, cause the processor to carry out the methods described herein. Such computer-readable media can be any available media, which can be accessed by a general purpose or special purpose computer. By way of example, and not limitation, such computer- readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. The computer- readable instructions can also be transmitted as a signal over a network or another communications connection (either hardwired, wireless, or a combination of hardwired or wireless) to the computer.

### BRIEF DESCRIPTION OF DRAWINGS

Fig. 1 is a block diagram illustrating an example of relevant functions of a smart device according to an exemplary embodiment;
Fig. 2 is a block diagram illustrating an example of a hardware configuration of an electrical system in a smart device according to an exemplary embodiment;
Fig. 3 is a flow chart illustrating an example of a flow of screen switching processing according to an exemplary embodiment;
Fig. 4 is a continuation (1) of the flow chart illustrated in Fig. 3;
Fig. 5 is a continuation (2) of the flow chart illustrated in Fig. 3;
Fig. 6 is a continuation of the flow chart illustrated in Fig. 5;
Fig. 7 is a screen mode diagram illustrating an example of an up-down scrollable screen displayed on a display of a smart device according to an exemplary embodiment;
Fig. 8 is a screen mode diagram illustrating an example of operation when an up-down scrollable screen is being scroll displayed on a display of a smart device according to an exemplary embodiment;
Fig. 9 is a screen mode diagram illustrating an example of a path of a special slide operation performed to a touch panel in a state in which an up-down scrollable screen is being displayed on a display of a smart device according to an exemplary embodiment;
Fig. 10 is a screen mode diagram illustrating a modified example of a path of a special slide operation performed to a touch panel in a state in which an up-down scrollable screen is being displayed on a display of a smart device according to an exemplary embodiment;
Fig. 11A is a screen mode diagram illustrating an example screen of an up-down scrollable screen including a bow and arrow image that is displayed by performing a special slide operation on a touch panel of a smart device according to an exemplary embodiment;
Fig. 11B is a screen mode diagram illustrating an example screen of an up-down scrollable screen including a bow and arrow image displayed by performing a special slide operation on a touch panel of a smart device according to an exemplary embodiment, in a state in which the arrow has been pulled back;
Fig. 11C is a screen mode diagram illustrating an example screen of an up-down scrollable screen including a bow and arrow image displayed by performing a special slide operation on a touch panel of a smart device according to an exemplary embodiment, in a case in which a scroll amount has been increased from the scroll amount illustrated in Fig. 11B;
Fig. 11D is a screen mode diagram illustrating an example of operation in a case in which the arrow of the bow and arrow image illustrated in Fig. 11C is being fired;
Fig. 11E is a screen mode diagram illustrating an example screen in a case in which a target image depicting a target into which an arrow has been fired is displayed in a display region in a state in which an up-down scrollable screen is being displayed on a display of a smart device according to an exemplary embodiment;
Fig. 12A is a screen mode diagram illustrating an example screen in a case in which a bow and arrow image is included in an address book screen displayed in a display region of a display of a smart device according to an exemplary embodiment;
Fig. 12B is a screen mode diagram illustrating an example of an address book screen and a bow and arrow image that is displayed in a display region of a display of a touch panel of a smart device according to an exemplary embodiment, in a case in which a scroll amount has been increased from the scroll amount illustrated in Fig. 12A;
Fig. 12C is a screen mode diagram illustrating an example of a case in which a target image depicting a target into which an arrow has been fired is displayed in a display region in a state in which an address book screen is being displayed on a display of a smart device according to an exemplary embodiment;
Fig. 13A is a screen mode diagram illustrating an example of a map screen that is displayed in a display region of a display of a smart device according to an exemplary embodiment;
Fig. 13B is a screen mode diagram illustrating an example screen in a case in which a bow and arrow image is included in a map screen that is displayed in a display region of a display of a smart device according to an exemplary embodiment;
Fig. 13C is a screen mode diagram illustrating an example of operation in a case in which a bow and arrow image is being rotated in a map screen that is displayed in a display region of a display of a smart device according to an exemplary embodiment;
Fig. 13D is a screen mode diagram illustrating an example of a bow and arrow image undergoing rotation in a map screen that is displayed in a display region of a display of a smart device according to an exemplary embodiment;
Fig. 13E is a screen mode diagram illustrating an example of a bow and arrow image following rotation in a map screen that is displayed in a display region of a display of a smart device according to an exemplary embodiment;
Fig. 13F is a screen mode diagram illustrating an example of a case in which an arrow has been pulled further back following rotation of a bow and arrow image on a map screen that is displayed in a display region of a display of a smart device according to an exemplary embodiment;
Fig. 13G is a screen mode diagram illustrating an example of a case in which a target image depicting a target into which an arrow has been fired is displayed in a display region in a state in which a map screen is being displayed on the display of a smart device according to an exemplary embodiment;
Fig. 14A is a screen mode diagram illustrating an example of a TV program guide screen displayed in a display region of a display of a smart device according to an exemplary embodiment;
Fig. 14B is a screen mode diagram illustrating an example screen in a case in which a bow and arrow image is included in a TV program guide screen displayed in a display region of a display region of a smart device according to an exemplary embodiment;
Fig. 14C is a screen mode diagram illustrating an example of operation when changing a TV channel in a TV program guide screen displayed in a display region of a display region of a smart device according to an exemplary embodiment;
Fig. 14D is a screen mode diagram illustrating an example screen when a TV channel has been changed in a TV program guide screen displayed in a display region of a display region of a smart device according to an exemplary embodiment;
Fig. 14E is a screen mode diagram illustrating an example of a TV program guide screen and a bow and arrow image displayed in a display region of a touch panel display of a smart device according to an exemplary embodiment, in a case in which a scroll amount has been increased from the scroll amount illustrated in Fig. 14D;
Fig. 14F is a screen mode diagram illustrating an example screen in a case in which a target image depicting a target into which an arrow has been fired is displayed in a display region in a state in which a TV program guide screen is being displayed on the display of a smart device according to an exemplary embodiment;
Fig. 15 is a screen mode diagram illustrating an example screen in a state in which of a region where a second slide operation has been performed is displayed emphatically in an up-down scrollable screen displayed on a display of a smart device according to an exemplary embodiment; and
Fig. 16 is a screen mode diagram illustrating an example screen in a case in which capture dates are displayed as amount identification information when images contained in a camera folder are displayed in a display region of a display of a smart device according to an exemplary embodiment.

### DESCRIPTION OF EMBODIMENTS

Detailed explanation follows regarding an example of an exemplary embodiment of technology disclosed herein, with reference to the drawings. Note that in the following explanation, explanation is given using a smart device as an example of a data processing device according to technology disclosed herein, however the technology disclosed herein is not limited thereto. The technology disclosed herein may be applied to various terminal devices such as a personal computer, a gaming device, a car navigation device, a digital camera or an electronic dictionary.

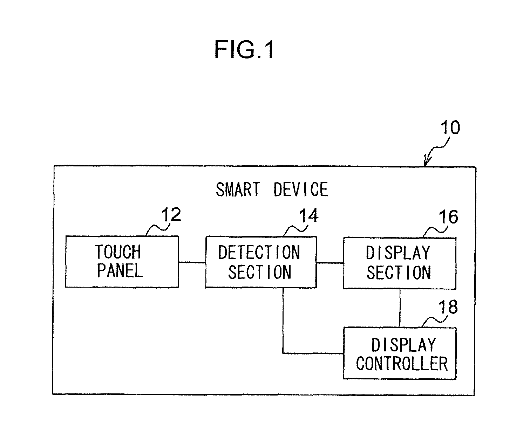

A smart device 10, an example of which is illustrated in Fig. 1, is equipped with a touch panel 12. The touch panel 12 detects contact by an instructing body (such as a finger or a stylus pen), and outputs contact position data (the present exemplary embodiment uses data including two-dimensional coordinates as an example) representing a contact position of the instructing body on the touch panel 12.

The smart device 10 is further equipped with a detection section 14, a display section 16 and a display controller 18. The detection section 14 detects a contact operation to the touch panel 12. Examples of contact operations include tap operation, slide operation, long press operation, pinch open operation (also referred to as pinch out operation), and pinch close operation (also referred to as pinch in operation).

Slide operation includes normal slide operation and special slide operation. A normal slide operation is, for example, a drag operation or a flick operation. A drag operation refers, for example, to an operation in which a contact instruction position, that is a position instructed by contacting the instructing body on the touch panel 12, is moved continuously for a specific duration (for example 100 milliseconds) or longer. A flick operation refers, for example, to an operation in which a movement distance of a movement operation to move the contact instruction position is a specific distance (for example 2 millimeters) or greater, and the instructing body is removed from the touch panel 12 before a specific duration has elapsed after the start of the movement operation, thus ending the movement operation.

Special slide operation is, for example, a specific drag operation (for example a drag operation combining a first to a fifth slide operation, described later). A specific drag operation refers, for example, to a drag operation accomplished by moving the contact position of the instructing body on the touch panel 12 along a specific route (for example a route determined by following each of the first to fifth slide operations, described later) without removing the instructing body from the touch panel 12.

The display section 16 displays a scrollable screen. When a normal slide operation is detected in a state in which a scrollable screen is being displayed by the display section 16, the display controller 18 performs scroll display of the scrollable screen according to the normal slide operation.

The display controller 18 moreover displays amount identification information on the display section 16 when a specific condition has been satisfied. The specific condition refers to a condition of detection by the detection section 14 of a special slide operation instructing a scroll amount to reach a non-displayed state screen for display on the display section 16, out of non-displayed state screens 36OFF of the scrollable screen other than a displayed state screen 36ON that is being displayed by the display section 16.

The display controller 18 displays on the display section 16 the non-displayed state screen identified by the scroll amount instructed by the special slide operation in cases in which screen switching conditions have been satisfied following on continuously from an instruction state of a special slide operation.

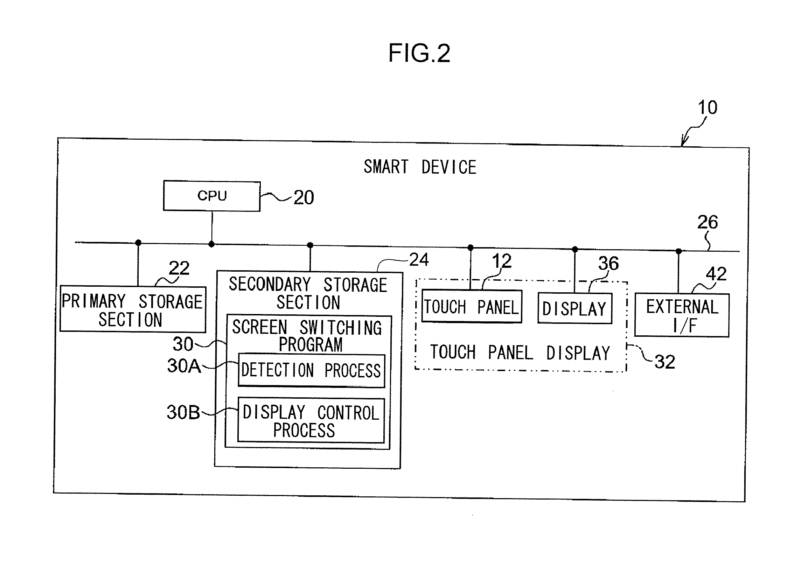

The smart device 10, of which an example is illustrated in Fig. 2, is equipped with a Central Processing Unit (CPU) 20, a primary storage section 22 and a secondary storage section 24. The primary storage section 22 is configured by volatile memory (for example Random Access Memory (RAM)). The secondary storage section 24 is configured by non-volatile memory (for example a Hard Disk Drive (HDD) or flash memory). The CPU 20, the primary storage section 22 and the secondary storage section 24 are mutually connected together through a bus 26.

The secondary storage section 24 stores a screen switching program 30. The CPU 20 reads and expands the screen switching program 30 from the secondary storage section 24 into the primary storage section 22, and sequentially executes processes of the screen switching program 30. The screen switching program 30 includes a detection process 30A and a display control process 30B. The CPU 20 functions as the detection section 14 illustrated in Fig. 1 by executing the detection process 30A. The CPU 20 also functions as the display controller 18 illustrated in Fig. 1 by executing the display control process 30B.

Note that an example is described of a case in which the screen switching program 30 is read from the secondary storage section 24, however the screen switching program 30 does not initially have to be stored in the secondary storage section 24. For example, configuration may be made such that the screen switching program 30 is first stored in an appropriate "portable storage medium" that is employed connected to the smart device 10, such as a Solid State Drive (SSD), a DVD disk, an IC card, a magneto-optical disk, or a CD-ROM. Configuration may then be made wherein the CPU 20 acquires the screen switching program 30 from the portable storage medium and executes the screen switching program 30. Configuration may also be made wherein the screen switching program 30 is stored in a storage section of an external computing device such as a computer or a server device to which the smart device 10 is connected through a communication line. In such cases, the CPU 20 acquires the screen switching program 30 from the external computing device and executes the screen switching program 30.

The smart device 10 is equipped with a touch panel display 32. The touch panel display 32 is equipped with the touch panel 12 and a display (such as a liquid crystal display) 36 serving as an example of the display section 16 illustrated in Fig. 1.

The display 36 is connected to the bus 26, and displays various information under control of the CPU 20. The touch panel 12 is a transparent type touch panel, and is superimposed on the display 36. The touch panel 12 outputs detection result data expressing detection results (whether or not the instructing body has contacted the touch panel 12) to the CPU 20 at a specific cycle (for example 5 milliseconds). Note that the detection result data includes contact position data in cases in which contact of the instructing body on the touch panel 12 has been detected, and does not include contact position data in cases in which contact by the instructing body on the touch panel 12 has not been detected.

The smart device 10 is equipped with an external interface (I/F) 42. An external device (such as a personal computer or USB memory) connects to the I/F 42, and the I/F 42 controls transmission and reception of various data between the external device and the CPU 20.

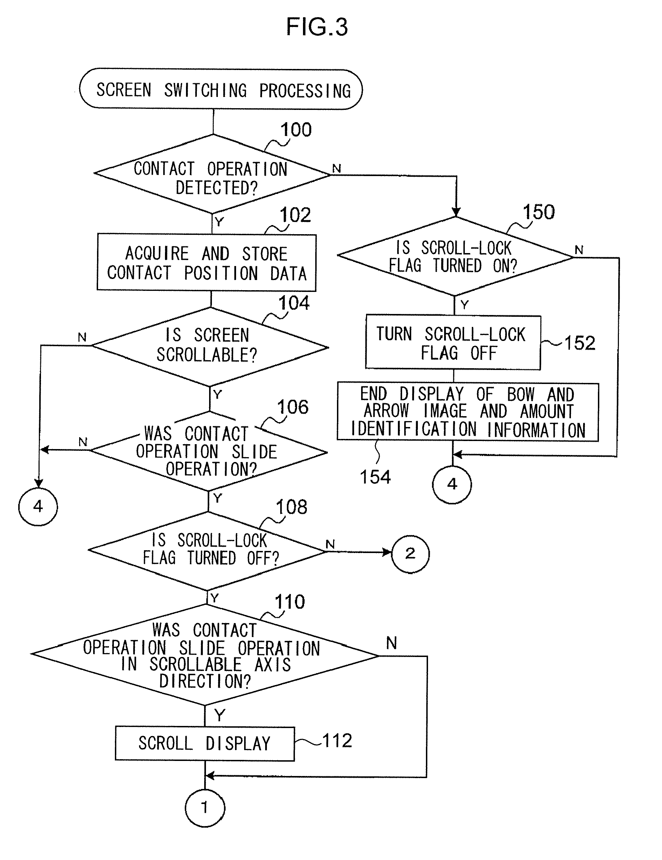

Next, as operation of the present exemplary embodiment, explanation follows with reference to the flow charts illustrated in Fig. 3 to Fig. 6 regarding screen switching processing performed by the smart device 10 by the CPU 20 executing the screen switching program 30 each time that detection result data is input from the touch panel 12. Note that for ease of explanation, explanation is given regarding cases in which certain types of screen are being displayed on the display 36.

At step 100, the detection section 14 determines based on the detection result data whether or not a contact operation has been detected by the touch panel 12. Determination is affirmative at step 100 when a contact operation to the touch panel 12 has been detected, and processing transitions to step 102. Determination is negative at step 100 when a contact operation to the touch panel 12 has not been detected, and processing transitions to step 150.

At step 102, the detection section 14 acquires the contact position data from the detection result data and stores the contact position data in the primary storage section 22, after which processing transitions to step 104.

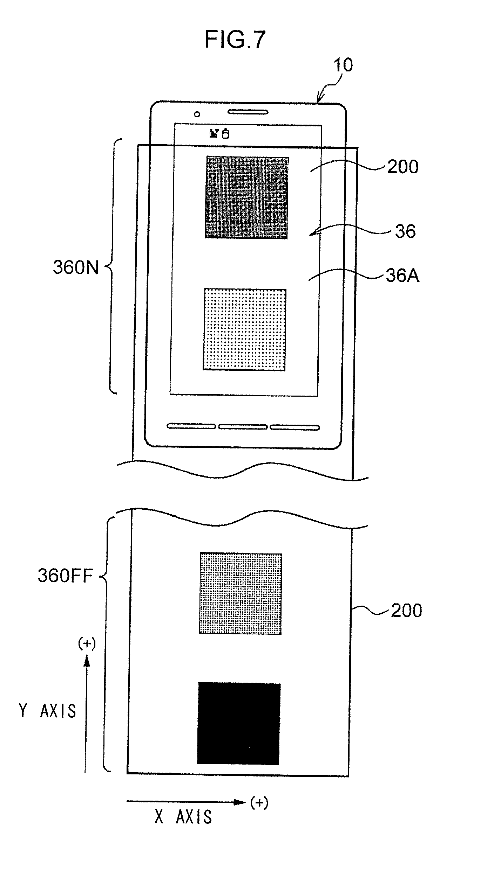

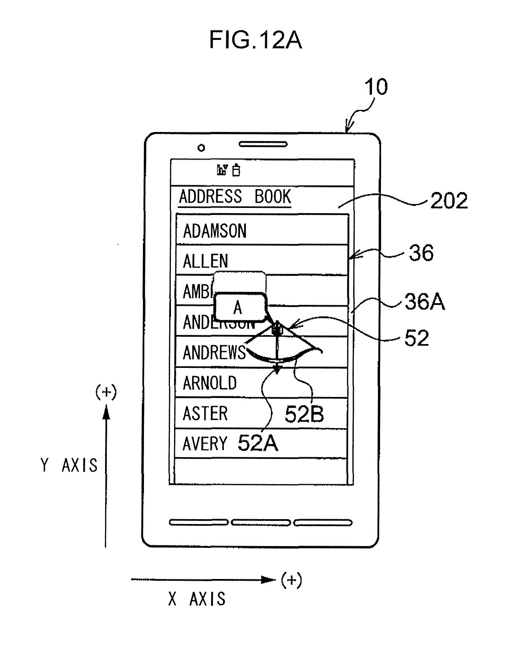

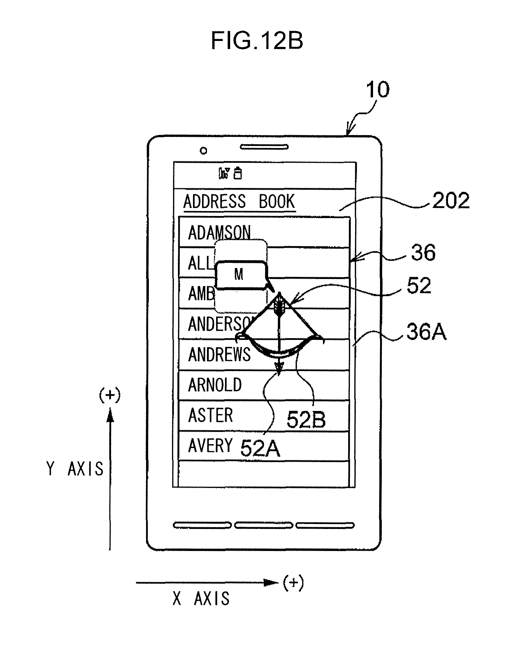

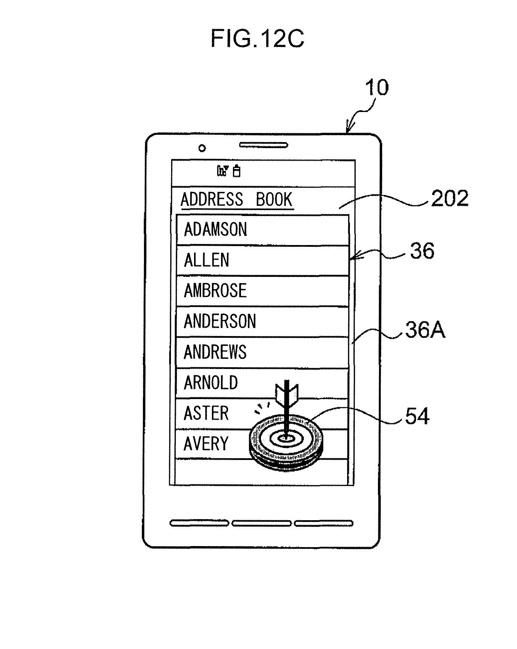

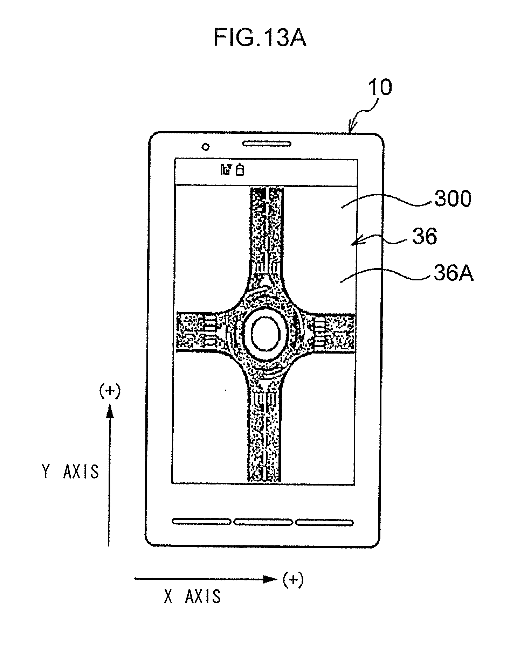

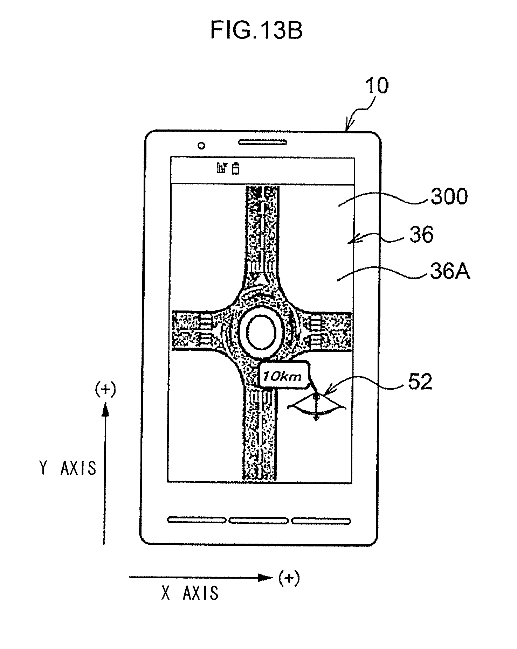

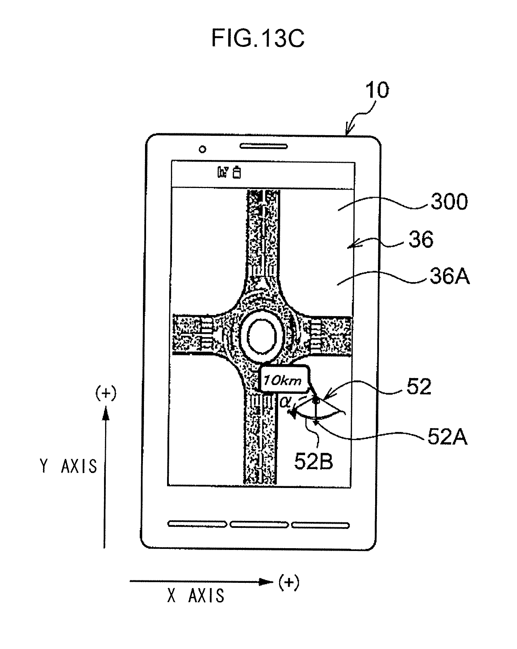

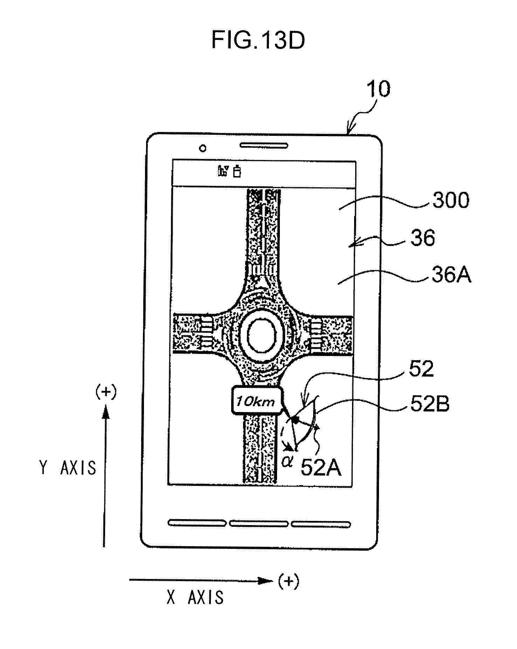

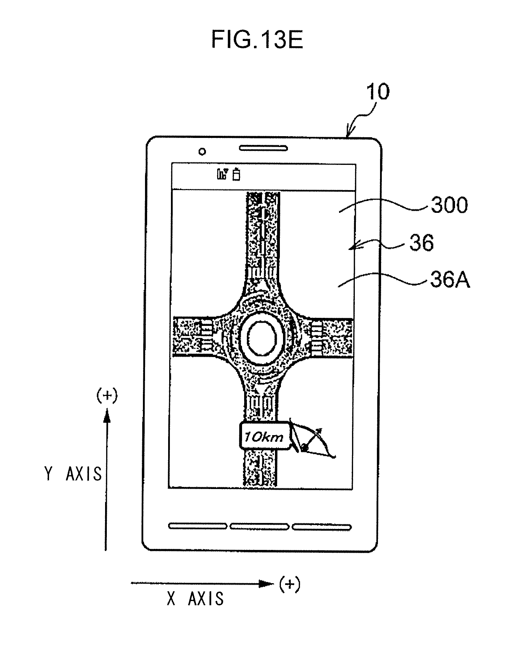

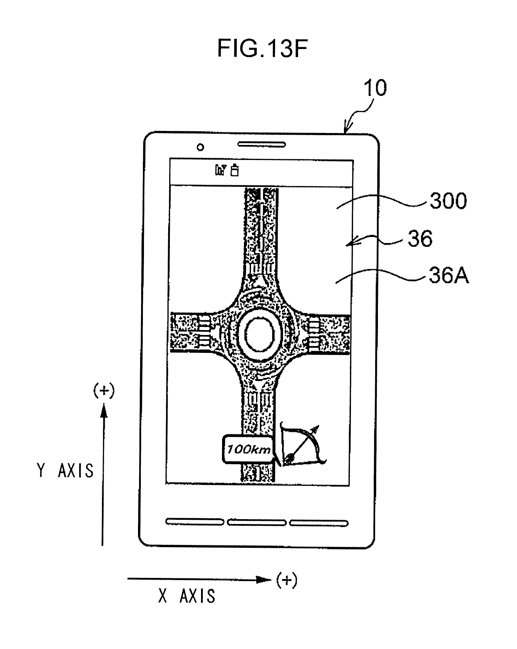

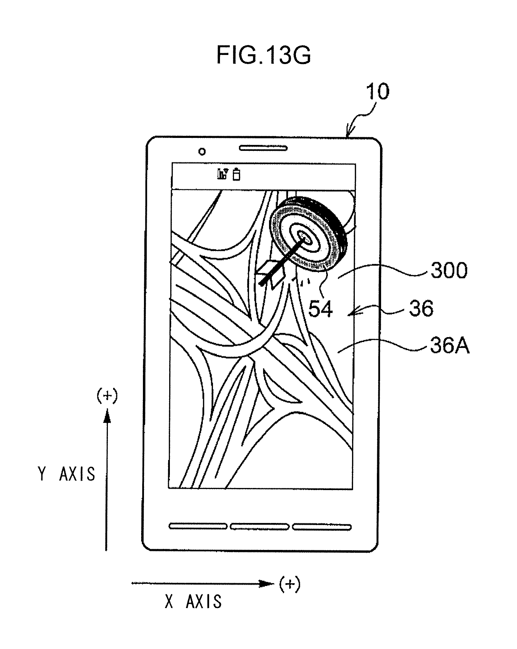

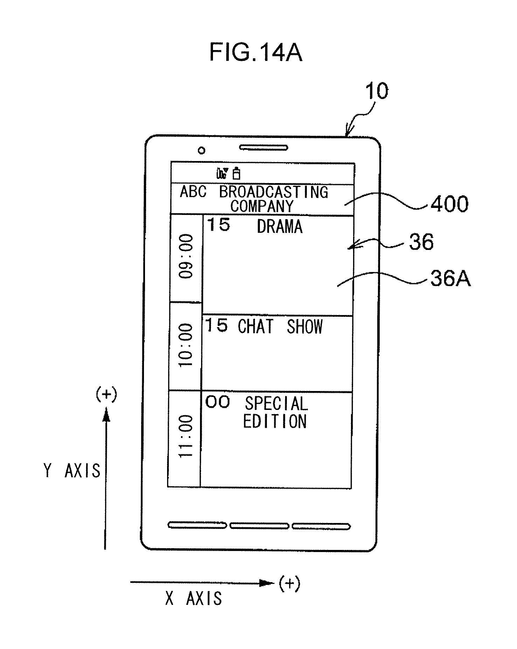

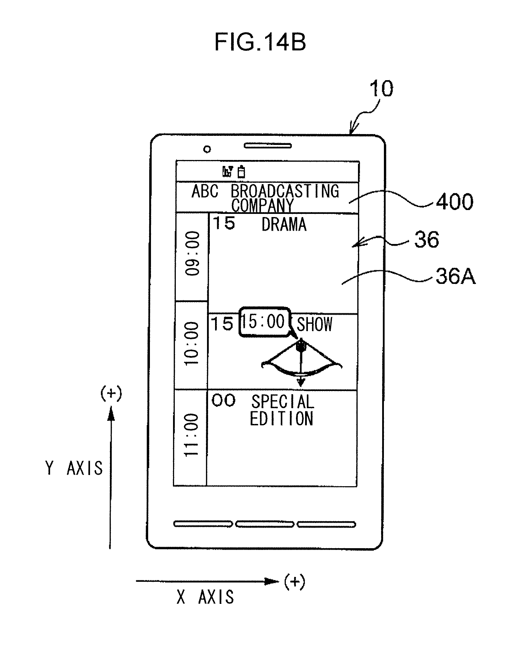

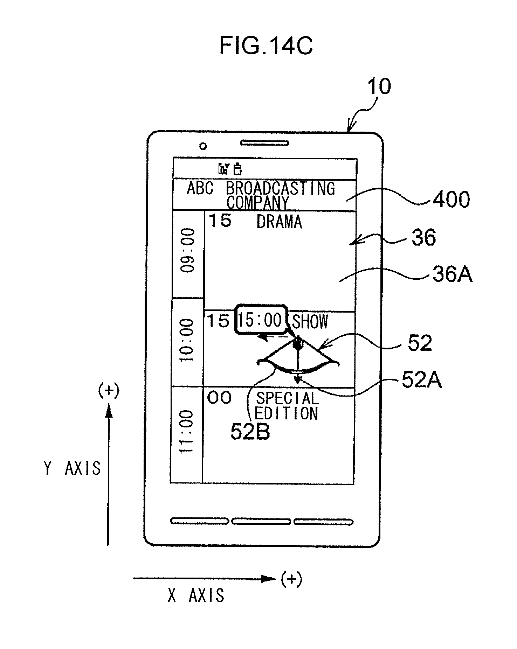

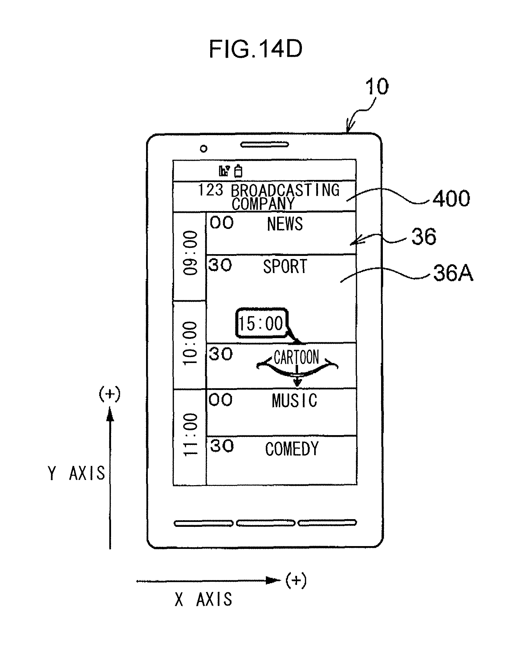

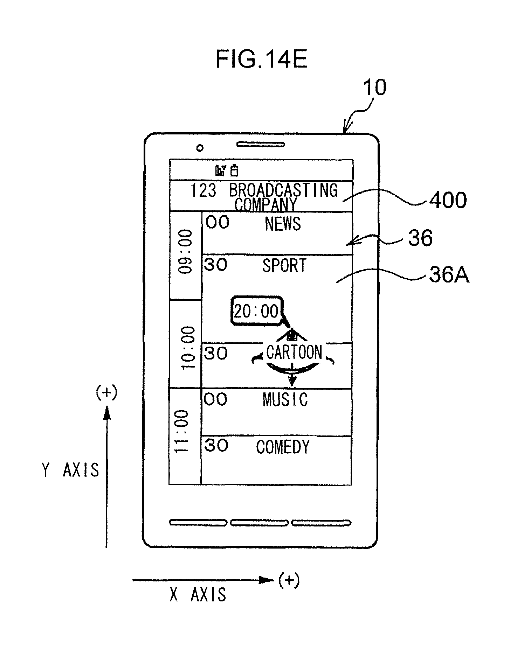

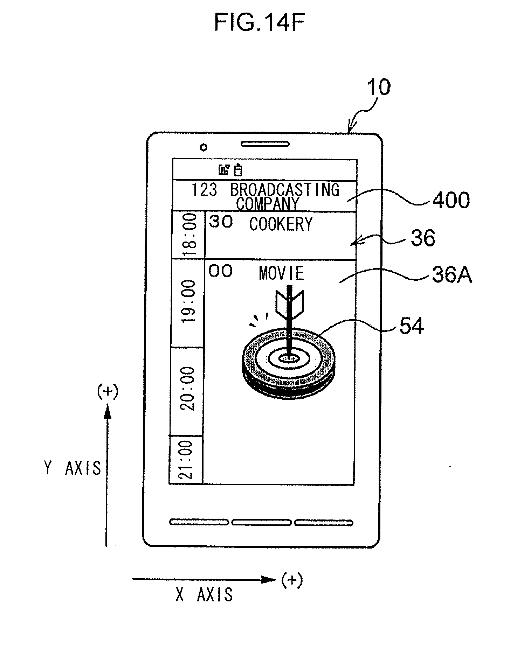

At step 104, the detection section 14 determines whether or the displayed state screen is a scrollable screen. Examples of scrollable screens are illustrated by the up-down scrollable screen 200 illustrated in Fig. 7, the address book screen 202 illustrated in Fig. 12A to Fig. 12C, the map screen 300 illustrated in Fig. 13A to Fig. 13G, and the TV program guide screen 400 illustrated in Fig. 14A to Fig. 14F. Note that in the following explanation, Fig. 12A to Fig. 12C are collectively referred to as Fig. 12 when there is no need for explanation that distinguishes between the respective contents of Fig. 12A to Fig. 12C. Moreover, in the following explanation Fig. 13A to Fig. 13G are collectively referred to as Fig. 13 when there is no need for explanation that distinguishes between the respective contents of Fig. 13A to Fig. 13G. Moreover, in the following explanation Fig. 14A to Fig. 14F are collectively referred to as Fig. 14 when there is no need for explanation that distinguishes between the respective contents of Fig. 14A to Fig. 14F.

Each of the scrollable screens illustrated in Fig. 7, Fig. 12, Fig. 13 and Fig. 14 are displayed on a rectangular shaped display region 36A of the display 36, with positions on the screen identified by two-dimensional coordinates specifying the contact position of the instructing body on the touch panel 12. Note that in the present exemplary embodiment, the long direction of the display region 36A is taken as the Y axis direction, and the short direction of the display region 36A is taken as the X axis direction.

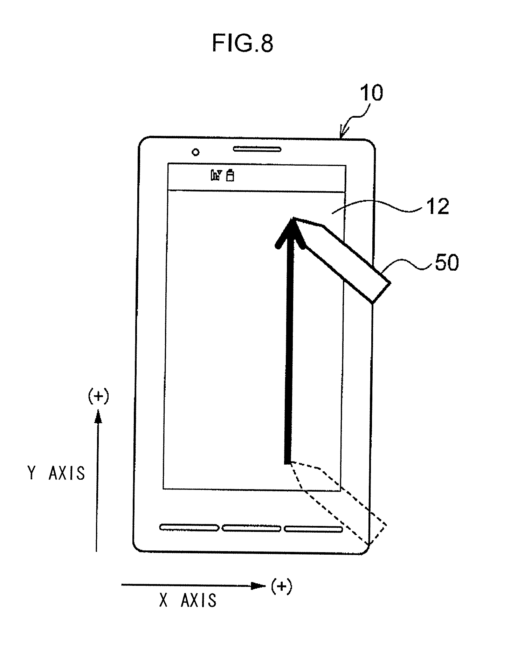

The up-down scrollable screen 200 illustrated in Fig. 7 is a scrollable screen that is scroll displayed in a Y axis plus (+) direction (+Y axis direction) and a Y axis minus (-) direction (-Y axis direction), and is not scroll displayed in directions other than the Y axis direction. Namely, the up-down scrollable screen 200 is scroll displayed in the +Y axis direction in response to +Y axis direction slide operation with respect to the touch panel 12, and is scroll displayed in the -Y axis direction in response to -Y axis direction slide operation on the touch panel 12. For example, as illustrated in Fig. 7, when a non-displayed state screen is present in the -Y axis direction as viewed from the displayed state screen, the non-displayed state screen is displayed by performing slide operation on the touch panel 12 in the +Y axis direction using an instructing body 50 as illustrated in the example in Fig. 8.

The address book screen 202 illustrated in Fig. 12 is a specific example of the up-down scrollable screen 200, and is a scrollable screen in which contact names are arranged in alphabetical order along the Y axis direction.

The map screen 300 illustrated in Fig. 13 is an omnidirectional scrolling type scrollable screen that is scroll displayed in the direction in which a slide operation is performed to the touch panel 12 (for example in any direction that can be stipulated using the two-dimensional coordinates of the touch panel 12).

The TV program guide screen 400 illustrated in Fig. 14 is an XY scrolling type scrollable screen, and is a scrollable screen displaying TV program guide for one specified TV channel out of plural TV channels. Namely, the TV program guide screen 400 is a scrollable screen in which TV program names are arranged chronologically along the Y axis direction for respective TV channels. The TV program guide is scroll displayed in response to the Y axis direction slide operation, and X axis direction flick operation switches between the TV channels.

Determination is affirmative at step 104 when the displayed state screen is a scrollable screen, and processing transitions to step 106. Determination is negative at step 104 when the displayed state screen is not a scrollable screen, and screen switching processing is ended.

At step 106, the detection section 14 determines whether or not the contact operation detected at step 100 was a slide operation. Determination is affirmative at step 106 when the contact operation detected at step 100 was a slide operation, and processing transitions to step 108. Determination is negative at step 106 when the contact operation detected at step 100 was not a slide operation, and screen switching processing is ended.

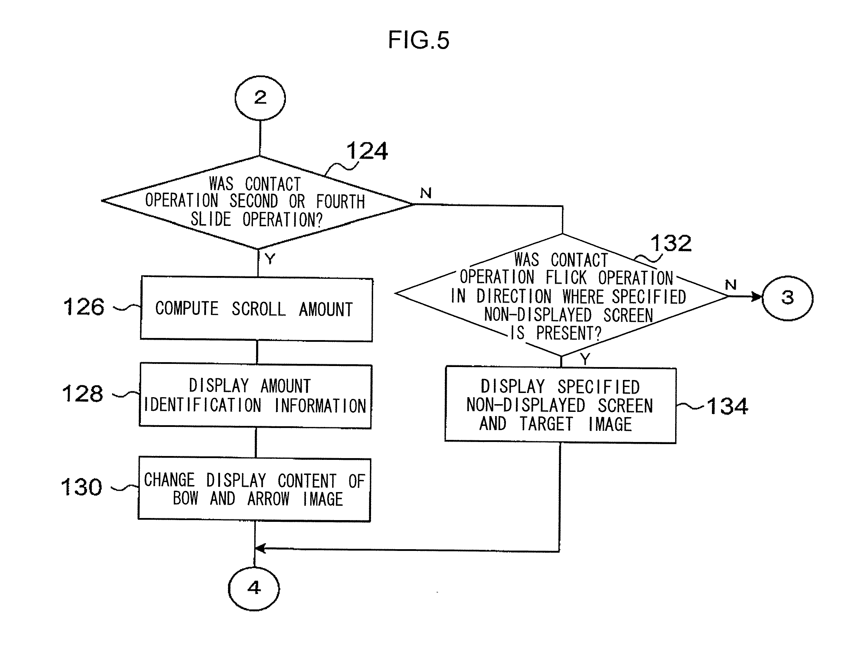

At step 108, the display controller 18 determines whether or not a scroll-lock flag that prohibits scroll display is OFF. Note that the scroll-lock flag is turned ON at step 120, described later, and is turned OFF at step 152, described later. Determination is affirmative at step 108 when the scroll-lock flag is OFF, and processing transitions to step 110. Determination is negative at step 108 when the scroll-lock flag is ON, and processing transitions to step 124, illustrated in Fig. 5.

At step 110, the display controller 18 determines whether or not the slide operation determined at step 106 was a slide operation in a scrollable axis direction. The scrollable axis direction refers, for example, to the Y axis direction in the up-down scrollable screen 200 and the address book screen 202, refers to any direction that can be identified using the two-dimensional coordinates in the map screen 300, and refers to the X axis direction and the Y axis direction in the TV program guide screen 400.

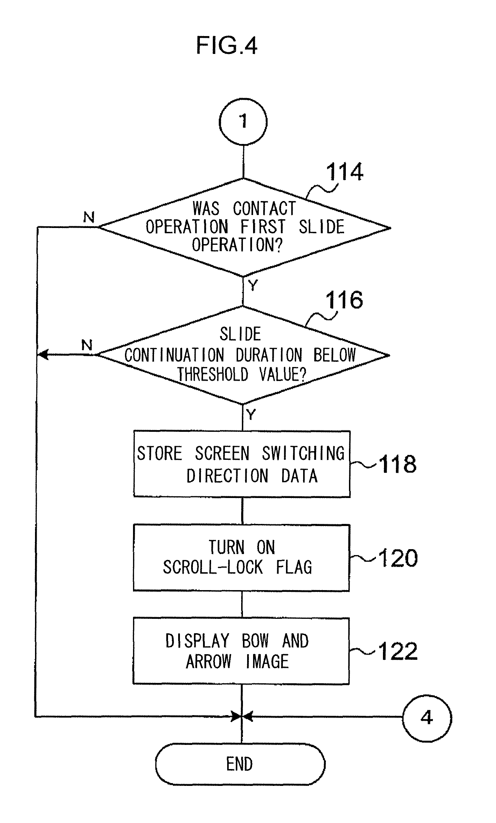

Determination is affirmative at step 110 when the slide operation determined at step 106 was a slide operation in a scrollable axis direction, and processing transitions to step 112. Determination is negative at step 110 when the slide operation determined at step 106 was not a slide operation in a scrollable axis direction, and processing transitions to step 114 illustrated in Fig. 4.

At step 112, the display controller 18 performs scroll display of the scrollable screen on the display 36 according to the slide operation determined at step 106, after which processing transitions to step 114.

At step 114 illustrated in Fig. 4, the display controller 18 determines whether or not the slide operation determined at step 106 was a first slide operation included in a special slide operation. Special slide operation is a slide operation instructing a scroll amount to reach a non-displayed state screen (referred to below as a "specified non-displayed screen") out of the non-displayed state screens of the scrollable screen for display on the display 36. The special slide operation includes the first slide operation to a fifth slide operation, and the first to fifth slide operations are drag operations that each follow a specific route.

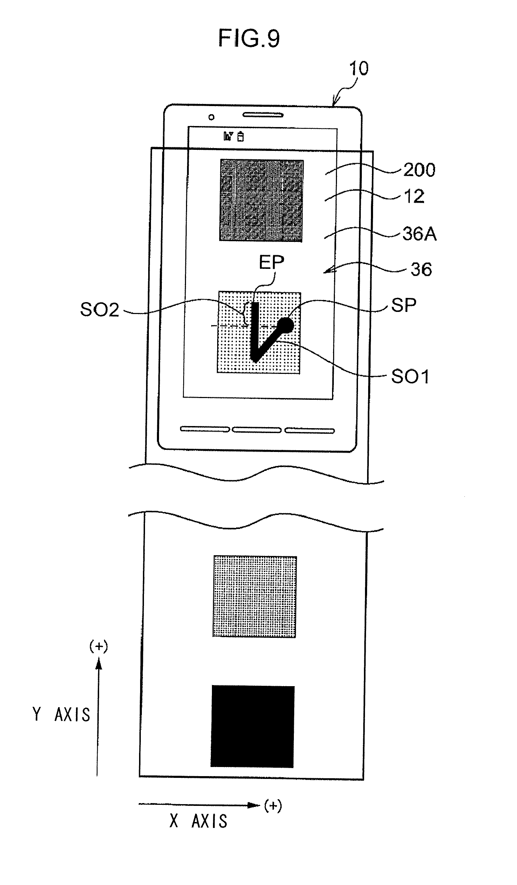

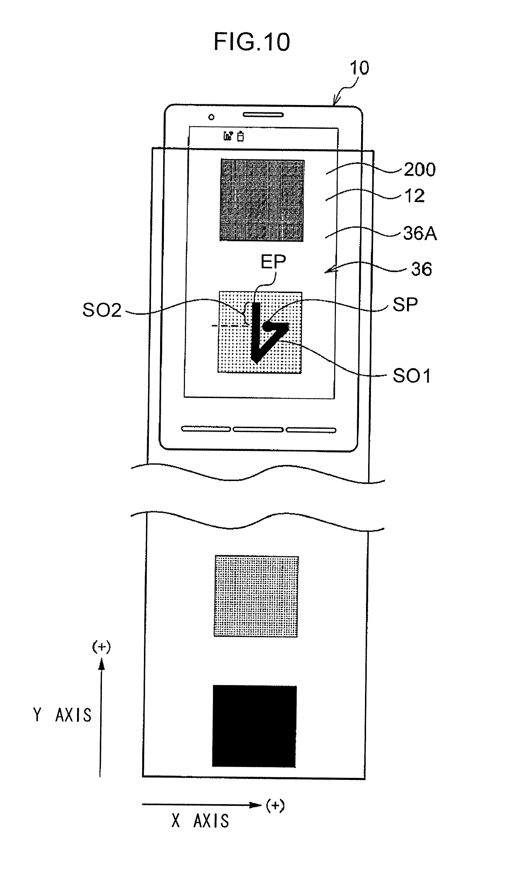

Fig. 9 illustrates an example of a path of a first slide operation SO1 and a second slide operation SO2 on the touch panel 12. The first slide operation SO1 is a drag operation that traces a path with a pointed end portion pointing toward the direction of the specified non-displayed screen. The pointed end portion refers here, for example, to a shape resembling a simplified arrowhead (for example a shape bent in an acute angle) with the bend point forming the tip of the arrowhead, as the pointed end portion. In the example illustrated in Fig. 9, the first slide operation SO1 is a combination of a drag operation running along a direction forming an acute angle with respect to the Y axis direction, and a drag operation running from the bend point along the +Y axis direction. As illustrated in the example of Fig. 10, the first slide operation SO1 may also be a drag operation that traces the shape of a path following the outline of a right-angled triangle (with a different pointed end portion to that illustrated in Fig. 9).

The second slide operation SO2 is a drag operation performed in continuation from the first slide operation SO1. In the example illustrated in Fig. 9, the second slide operation SO2 is a drag operation with a start position after passing through an end position of the first slide operation SO1 (for example, a position in the +Y axis direction alongside a start position SP of the first slide operation SO1), and running in a straight line along the Y axis direction. The scroll amount from the displayed state screen to the specified non-displayed screen is determined according to the positional separation between the start position of the second slide operation and a current position (for example an end position EP) of the second slide operation. Namely, the greater the positional separation, the greater the instructed scroll amount, and the smaller the positional separation, the smaller the instructed scroll amount.

The third slide operation is a drag operation that adjusts the direction instructed by the first slide operation. The fourth slide operation is a drag operation that adjusts the scroll amount instructed by the second slide operation. Moreover, the fifth slide operation is a drag operation to change the TV channel whose TV program guide is the scroll subject of the TV program guide screen 400.

Determination is affirmative at step 114 when the slide operation determined at step 106 was the first slide operation, and processing transitions to step 116. Determination is negative at step 114 when the slide operation determined at step 106 was not the first slide operation, and screen switching processing is ended. Note that determination as to whether or not the slide operation was the first slide operation is, for example, made according to whether or not a path tracing the pointed end portion illustrated in the example of the first slide operation in Fig. 9 was followed, and whether or not a specific position has been reached. The specific position referred to here is, for example, a position in the +Y axis direction alongside the start position of the first slide operation.

At step 116, the display controller 18 determines whether or not the continuation duration of the first slide operation is below a threshold value (for example 2 seconds). Determination is affirmative at step 116 when the continuation duration of the first slide operation is below the threshold value (it is determined that the first slide operation determined at step 114 is a slide operation included in the special slide operation), and processing transitions to step 118. Determination is negative at step 116 when the continuation duration of the first slide operation is the threshold value or greater (it is determined that the first slide operation determined at step 114 is a slide operation unrelated to the special slide operation), and screen switching processing is ended.

At step 118, the display controller 18 stores in the primary storage section 22 screen switching direction data representing the direction pointed to by the pointed end portion (a direction in which the specified non-displayed screen is present, referred to below as the screen switching direction).

At step 120, the display controller 18 turns ON the scroll-lock flag, and then processing transitions to step 122.

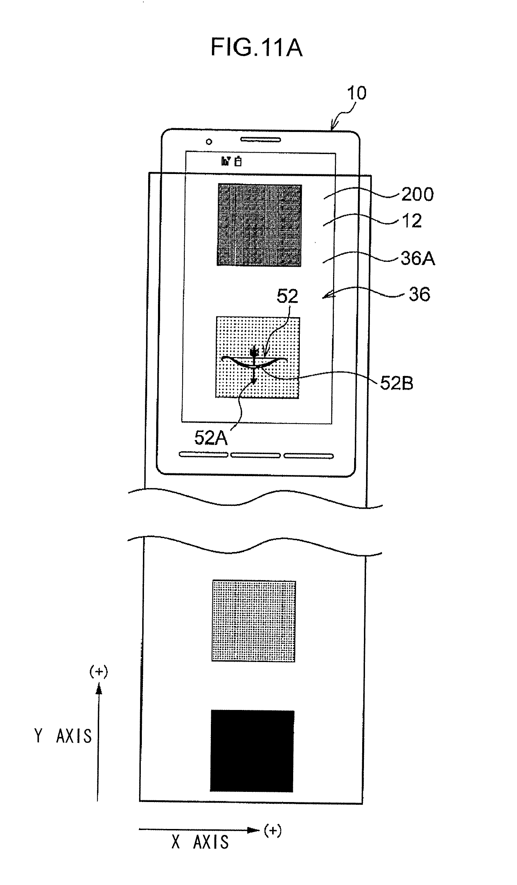

At step 122, the display controller 18 displays on the display 36 a bow and arrow image 52, of which an example is illustrated in Fig. 11A, after which screen switching processing is ended. The bow and arrow image 52 referred to here is an image combining an arrow image 52A and a bow image 52B. The arrow image 52A is an image of an arrow and depicts the arrow with the arrowhead pointing in the direction pointed to by the pointed end portion. The bow image 52B is an image of a bow and depicts a bow for firing the arrow depicted by the arrow image 52A.

At step 124 illustrated in Fig. 5, the display controller 18 determines whether or not the slide operation determined at step 106 was the second or the fourth slide operation.

Determination is affirmative at step 124 when the slide operation determined at step 106 was a second or a fourth slide operation, and processing transitions to step 126. Determination is negative at step 124 when the slide operation determined at step 106 was not the second or the fourth slide operation, and processing transitions to step 132.

At step 126, when the slide operation determined at step 106 was the second slide operation, the display controller 18 computes an instructed scroll amount from the displayed state screen to the specified non-displayed screen based on the positional separation between the start position of the second slide operation and the current position of the second special slide operation. The computed instructed scroll amount is stored in (saved so as to overwrite) the primary storage section 22. Moreover at step 126, when the slide operation determined at step 106 was the fourth slide operation, the display controller 18 computes an instructed scroll amount from the displayed state screen to the specified non-displayed screen based on an identified slide direction and the scroll amount. Namely, the display controller 18 adjusts the instructed scroll amount currently stored in the primary storage section 22 according to the slide amount toward the identified slide direction of the fourth slide operation. The identified slide direction refers, for example, to a straight line slide direction specified when the screen switching direction represented by the screen switching direction data currently stored in the primary storage section 22 is taken as the + direction, and the opposite direction to the screen switching direction is taken as the - direction.

Note that the positional separation between the second slide operation start position and the current position of the second slide operation, and also the identified slide direction and the slide amount of the fourth slide operation are identified, for example, using the contact position data that was stored in the primary storage section 22 at step 102.

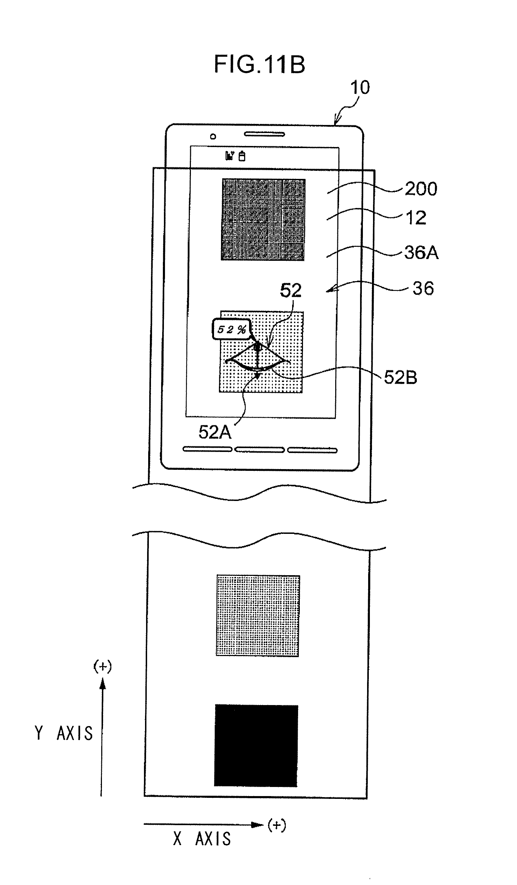

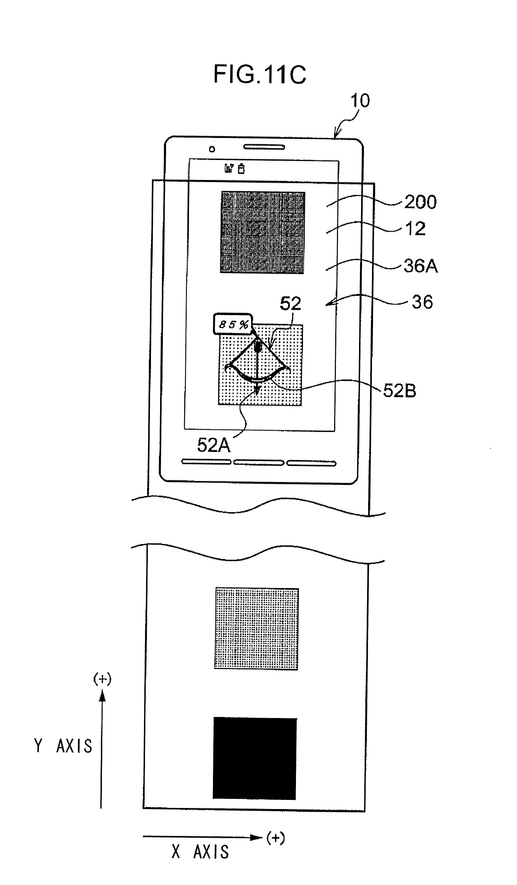

At the next step 128, the display controller 18 displays on the display 36 amount identification information that identifies the instructed scroll amount computed at step 126, as illustrated in the examples of Fig. 11B and Fig. 11C, and then processing transitions to step 130. An example of the amount identification information is a percentage representing a proportion of the instructed scroll amount from the displayed state screen to the specified non-displayed screen with respect to a reference scroll amount. The reference scroll amount refers, for example, to a scroll amount from the displayed state screen of a scrollable screen to a scroll display end screen in the direction pointed to by the pointed end portion.

Note that in the example illustrated in Fig. 11B, "52%" is displayed as the amount identification information at an arrow flight portion, and in the example illustrated in Fig. 11C, "85%" is displayed as the amount identification information at the arrow flight portion. "52%" and "85%" are respectively percentages representing the position where the specified non-displayed screen is present, taking in a scrollable screen, for example, the distance from the displayed state screen to the scroll display end screen in the direction pointed to by the pointed end portion as "100%".

The amount identification information is not limited to percentages, and other information may be employed. In the address book screen 202 illustrated in Figs. 12, display is made using a format that cycles in sequence alphabetically according to initial letters (an example of amount identification information), as illustrated in Fig. 12A and Fig. 12B, for example. Namely, in the example illustrated in Fig. 12A, out of "A" through "Z", "A" is being displayed, and in the example illustrated in Fig. 12B, "M" is being displayed.

Note that an example is illustrated using an English address book, however technology disclosed herein is not limited thereto. For example, in a Japanese address book, instead of "A" to "Z" according to the initial letters of surnames, display is made using a display format that cycles in sequence through the "a-line" to the "wa-line", displaying the line to which the first phoneme of the surname belongs as the amount identification information.

In the map screen 300 illustrated in Fig. 13, a distance in kilometers is displayed as an example of the amount identification information. Namely, "10 km" is displayed in the examples illustrated in Fig. 13B to Fig. 13E, and "100 km" is displayed in the example illustrated in Fig. 13F. In the TV program guide screen 400 illustrated in Fig. 14B to Fig. 14E, start times for TV broadcasts are displayed as an example of amount identification information. Namely, "15:00" is displayed in the examples illustrated in Fig. 14B to Fig. 14D, and "20:00" is displayed in the example illustrated in Fig. 14E.

At step 130, the display controller 18 controls the display 36 such that the display content of the bow and arrow image 52 changes from a bow and arrow unused mode, of which an example is illustrated in Fig. 11A, to a bow and arrow in-use mode, of which an example is illustrated in Fig. 11B and Fig. 11C, after which screen switching processing is ended. The bow and arrow unused mode refers to a mode in which the arrow has not been pulled back and the bow and bowstring are not flexed. The bow and arrow in-use mode refers to a mode in which the arrow has been pulled back and the bow and bowstring are flexed.

Note that the examples illustrated in Fig. 11B and Fig. 11C illustrate the bow and arrow in-use mode, in states with different pullback amounts of the arrow, flex amounts of the bow and flex amounts of the bowstring. The varying states of pullback amount of the arrow, flex amount of the bow and flex amount of the bowstring (display content) are realized by the processing of step 130. This also applies to the bow and arrow images 52 respectively illustrated in the address book screen 202 illustrated in Fig. 12A and Fig. 12B, in the map screen 300 illustrated in Fig. 13B to Fig. 13F, and in the TV program guide screen 400 illustrated in Fig. 14D and Fig. 14E.

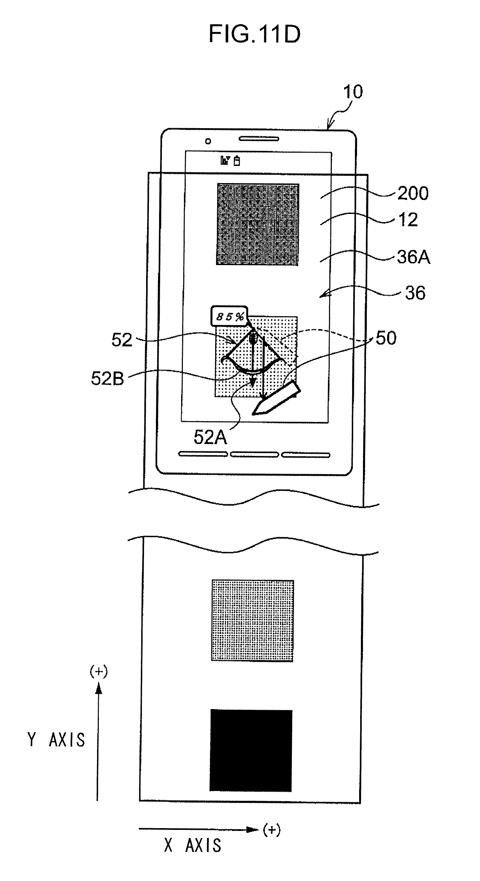

At step 132, the display controller 18 determines whether or not the slide operation determined at step 106 was a flick operation toward the direction in which the specified non-displayed screen is present (for example the flick operation by the instructing body 50 illustrated in Fig. 11 D). Determination is affirmative at step 132 when the slide operation determined at step 106 was a flick operation toward the direction in which the specified non-displayed screen is present, and processing transitions to step 134. Determination is negative at step 132 when the slide operation determined at step 106 was not a flick operation toward the direction in which the specified non-displayed screen is present, and processing transitions to step 136.

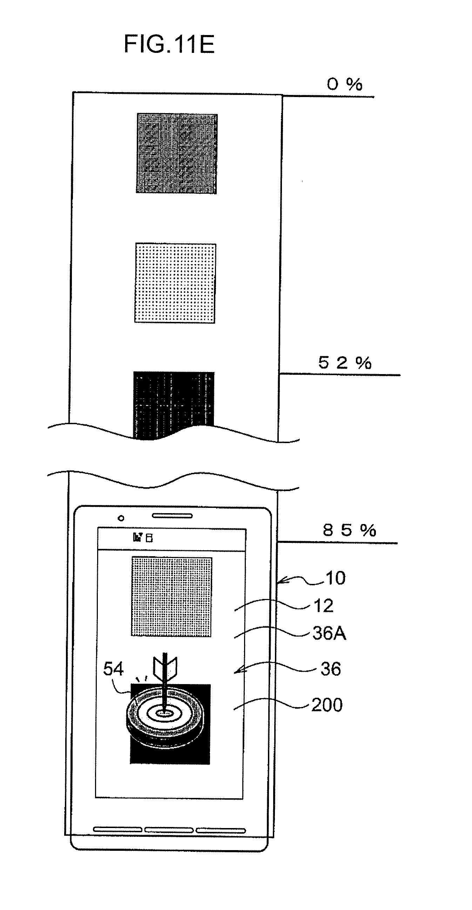

At step 134, as illustrated in the example in Fig. 11E, the display controller 18 displays on the display 36 the specified non-displayed screen identified by the screen switching direction data, and the instructed scroll amount computed at step 126, that are stored in the primary storage section 22. Moreover, at step 134 the display controller 18 displays a target image 54 on the display region 36A of the display 36 as illustrated in the examples of Fig. 11E, Fig. 12C, Fig. 13G and Fig. 14F, after which screen switching processing is ended. The target image 54 refers to an image depicting a target into which an arrow has been fired.

Note that at step 134, display switches to the specified non-displayed screen identified by the screen switching direction data and the instructed scroll amount calculated at step 126 without an accompanying scroll display (using jump scroll display), however the technology disclosed herein is not limited thereto. For example, display may switch to the specified non-displayed screen accompanied by scroll display. Moreover, at step 134, when the target image 54 is displayed in the display region 36A, a sound effect (such as a generally recognizable sound of an arrow hitting a target) is output from a speaker, however technology disclosed herein is not limited thereto. For example, a vibrating device may vibrate to match a display timing of the target image 54.

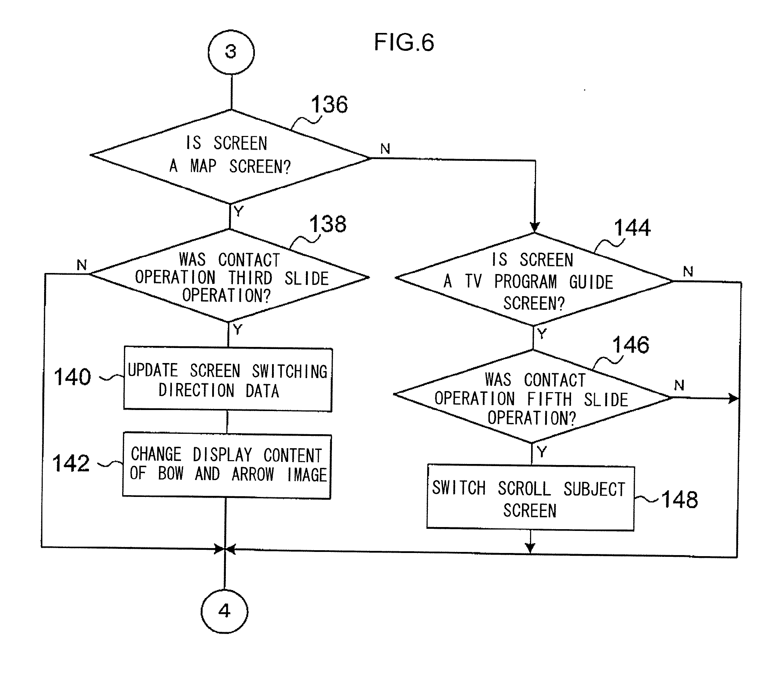

At step 136 illustrated in Fig. 6, the display controller 18 determines whether or not the displayed state screen is the map screen 300. Determination is affirmative at step 136 when the displayed state screen is the map screen 300, and processing transitions to step 138. Determination is negative at step 136 when the displayed state screen is not the map screen 300, and processing transitions to step 144.

At step 138, the display controller 18 determines whether or not the slide operation determined at step 106 was a third slide operation. The third slide operation refers, for example, to a drag operation toward an adjusted instruction direction instructing adjustment of the screen switching direction. The adjusted instruction direction refers, for example, to a direction to rotate the bow and arrow image 52 about a rotation axis of the arrowhead depicted by the arrow image 52A, as illustrated in Fig. 13C and Fig. 13D. Accordingly the third slide operation refers, for example, to a rotation drag operation tracing a circular arc shaped path α about the rotation axis of the arrowhead depicted by the arrow image 52A, as illustrated in Fig. 13C and Fig. 13D. The screen switching direction that is the direction of the arrowhead depicted by the arrow image 52A is adjusted according to the rotation drag amount of this rotation drag operation.

Determination is affirmative at step 138 when the slide operation determined at step 106 was a third slide operation, and processing transitions to step 140. Determination is negative at step 138 when the slide operation determined at step 106 was not a third slide operation, and screen switching processing is ended.

At step 140, the display controller 18 updates the screen switching direction data stored in the primary storage section 22 to screen switching direction data, expressing the screen switching direction adjusted according to the slide operation determined at step 138, after which processing transitions to step 142.

At step 142, the display controller 18 changes the display content of the bow and arrow image 52 by rotating the bow and arrow image 52 on the display region 36A about the rotation axis of the arrowhead, as illustrated in the examples of Fig. 13B to Fig. 13E, after which screen switching processing is ended.

At step 144, the display controller 18 determines whether or not the displayed state screen is the TV program guide screen 400. Determination is affirmative at step 144 when the displayed state screen is the TV program guide screen 400, and processing transitions to step 146. Determination is negative at step 144 when the displayed state screen is not the TV program guide screen 400, and screen switching processing is ended.

At step 146, the display controller 18 determines whether or not the slide operation determined at step 106 was a fifth slide operation. The fifth slide operation refers, for example, to a drag operation toward a scroll subject switching direction. The scroll subject switching direction refers, for example, to a direction in which TV program guide of a TV channel are present adjacent to TV program guide of a TV channel whose TV program guide are the scroll subject of the TV program guide screen 400. For example, as illustrated in Fig. 14C, when the arrowhead depicted by the arrow image 52A is pointing in the -Y axis direction, the scroll subject switching direction is the -X axis direction (the direction of the intermittent line arrow in Fig. 14C).

Determination is affirmative at step 146 when the slide operation determined at step 106 was the fifth slide operation, and processing transitions to step 148. Determination is negative at step 146 when the slide operation determined at step 106 was not the fifth slide operation, and screen switching processing is ended.

At step 148, the display controller 18 controls the display 36 to switch the scroll subject screen, as illustrated in the examples of Fig. 14C and Fig. 14D, after which screen switching processing is ended. The scroll subject screen refers to TV program guide that are the scroll subject of the TV program guide screen 400. The scroll subject screen currently being displayed on the display region 36A is switched to the adjacent scroll subject screen in the scroll subject switching direction by the processing of step 148.

Returning now to Fig. 3, at step 150, the display controller 18 determines whether or not the scroll-lock flag is turned ON. Determination is affirmative at step 150 when the scroll-lock flag is turned ON, and processing transitions to step 152. Determination is negative at step 150 when the scroll-lock flag is turned OFF, and screen switching processing is ended.

At step 152, the display controller 18 turns OFF the scroll-lock flag, after which processing transitions to step 154.

At step 154, the display controller 18 ends display of the bow and arrow image 52 and the amount identification information (non-display), after which screen switching processing is ended.

As described above, in the smart device 10 the display controller 18 displays on the display 36 the amount identification information when a special slide operation has been detected by the detection section 14 in a state in which a scrollable screen is being displayed. Moreover, the display controller 18 displays on the display 36 a non-displayed state screen identified by the scroll amount instructed by the special slide operation when a flick operation in a specific direction is detected by the detection section 14 following on continuously from the special slide operation. The smart device 10 is accordingly capable of reducing the effort involved in displaying a screen desired by a user of the smart device 10 (referred to below as the "user") on the scrollable screen.

The smart device 10 advises the user of the direction of the specified non-displayed screen using the arrowhead of the arrow image 52A displayed in the display region 36A, and advises the user of the instructed scroll amount to reach the specified non-displayed screen using the amount identification information displayed in the display region 36A. The user is accordingly able to easily ascertain the instructed position of a special slide operation.

Moreover, in the smart device 10, the special slide operation includes the first slide operation to instruct the direction of the specified non-displayed screen, and the second slide operation that is performed following on continuously from the first slide operation. The scroll amount instructed by the second slide operation is determined according to the positional separation between the start position of the second slide operation and the current position of the second slide operation. The user is accordingly able to easily instruct the scroll amount to display the specified non-displayed screen from the displayed state screen.

Moreover, in the smart device 10, the first slide operation is a slide operation that traces a path with a pointed end portion pointing in the direction of the specified non-displayed screen. The user is accordingly able to easily instruct the specified non-displayed screen.

Moreover, in the smart device 10, the amount identification information is displayed on the display 36 accompanying the second slide operation according to the positional separation between the start position of the second slide operation and the current position of the second slide operation. The user can accordingly easily ascertain the scroll amount from the displayed state screen to the specified non-displayed screen.

Moreover, in the smart device 10 the special slide operation includes the third slide operation that is a slide operation toward an adjusted instruction direction, and the fourth slide operation that is a slide operation to adjust the scroll amount instructed by the second slide operation. The user can accordingly easily change the instructed direction in which the specified non-displayed screen is present and the instructed scroll amount to reach the specified non-displayed screen.

Moreover, in the smart device 10, when the direction of the specified non-displayed screen is adjusted by the third slide operation, the direction of the arrowhead of the arrow image 52A is changed according to the adjustment result. When the scroll amount is adjusted by the fourth slide operation, the amount identification information and the pullback amount of the arrow depicted by the arrow image 52A, and the flex amount of the bow and the bowstring depicted by the bow image 52B are changed according to the adjustment result. The user is accordingly able to ascertain the position of the specified non-displayed screen intuitively.

Moreover, in the smart device 10, when a flick operation has been determined at step 132, jump scroll display is performed to the specified non-displayed screen identified by the screen switching direction data and the instructed scroll amount computed at step 126. The smart device 10 is accordingly able to suppress power consumption accompanying the scroll display performed to display the specified non-displayed screen.

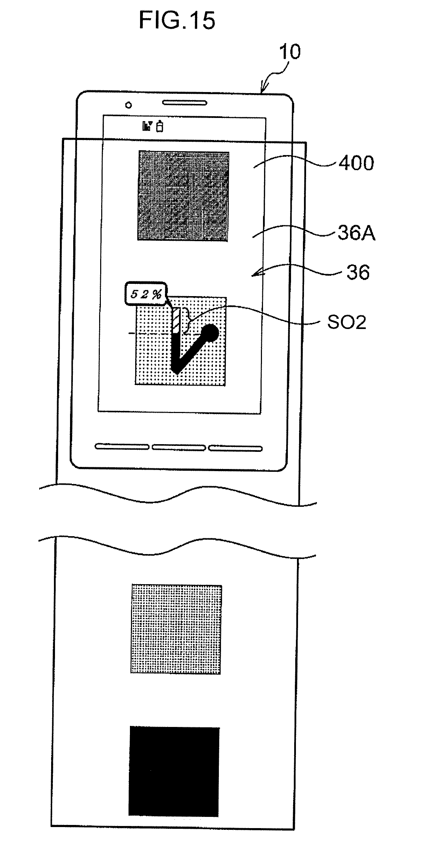

Note that in the exemplary embodiment described above, explanation has been given regarding an example in which the bow and arrow image 52 is displayed in the display region 36A, however the technology disclosed herein is not limited thereto. For example, a path image representing the path of the first slide operation and the second slide operation may be displayed. Moreover, for example as illustrated in Fig. 15, a line portion joining the start position and the current position of the second slide operation may be displayed with emphasis using a specific display mode, so as to be made distinguishable from other regions, without displaying the bow and arrow image 52 in the display region 36A.

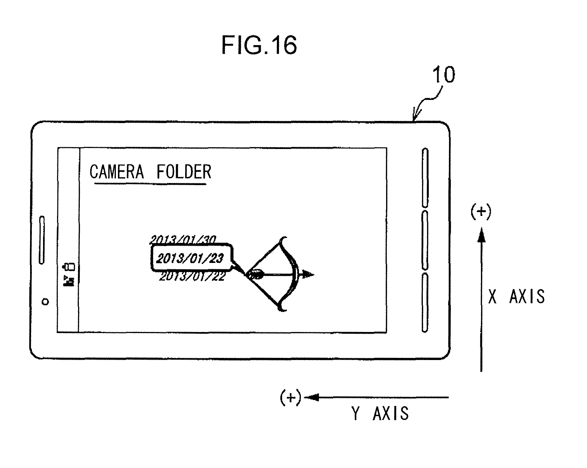

Moreover, in the exemplary embodiment described above, explanation has been given regarding an example in which, for the address book screen 202, a display format, that cycles in sequence alphabetically, is displayed with the initial letter as an example of the amount identification information; however technology disclosed herein is not limited thereto. For example, as illustrated in Fig. 16, a display format may be displayed that cycles sequentially through capture dates of images contained in a camera folder (or the dates on which images were stored in the camera folder) in which photographic images captured using a camera are stored by date.

In the exemplary embodiment described above, explanation has been given regarding an example in which the specified non-displayed screen is displayed in the display region 36A by performing a flick operation (the processing of step 132) following the special slide operation toward the direction in which the specified non-displayed screen is present, however technology disclosed herein is not limited thereto. For example, the specified non-displayed screen may be displayed in the display region 36A by performing a slide operation tracing a specific path (for example a spiral shaped path or a star shaped path) following the special slide operation. Moreover, the specified non-displayed screen may be displayed in the display region 36A by removing the instructing body 50 from the touch panel 12 following the special slide operation and then performing a specific slide operation within a specific duration (such as 1 second) of removing the instructing body 50. The specified non-displayed screen may also be displayed in the display region 36A by pressing a specific key on the smart device 10. Moreover, the specified non-displayed screen may be displayed in the display region 36A by removing the instructing body 50 from the touch panel 12 following the special slide operation. It is thus sufficient for the specified non-displayed screen to be displayed in the display region 36A when a screen switching condition (predetermined condition) has been satisfied following on continuously from an instruction state of a special slide operation.

In the exemplary embodiment described above, explanation has been given regarding an example in which the special slide operation includes the first to the fifth slide operations, however technology disclosed herein is not limited thereto, and it is sufficient for the special slide operation to include at least the second slide operation. For example, it is sufficient to establish that a special slide operation has been started by performing a slide operation equivalent to a first slide operation, and then instruct the scroll amount by performing the second slide operation. In such cases, the scroll amount is instructed by the special slide operation without instructing the direction of the specified non-displayed screen by a slide operation, and a flick operation is then performed equivalent to the flick operation determined at step 132. A non-displayed state screen is thereby displayed, by scroll display or jump scroll display of the instructed scroll amount, in a predetermined scroll direction.

In the exemplary embodiment described above, explanation has been given regarding an example in which the arrowhead of the arrow image 52A points in the direction of the specified non-displayed screen, however there is no limitation thereto, and the direction may be displayed using text information. For example, in the map screen 300, when the specified non-displayed screen is to the northwest with respect to the displayed state screen, text information may display "northwest" in writing together with the amount identification information.

One aspect of technology disclosed herein exhibits an advantageous effect of enabling a reduction in the effort involved in displaying a screen desired by a user on a scrollable screen.

## Claims

1. A terminal device (10), comprising:
a detection section (14) that detects a normal slide operation and a special slide operation at a touch panel (12);
a display section (16) that displays a scrollable screen;
a display controller (18) that, when the normal slide operation is detected in a state in which the display section (16) is displaying the scrollable screen, performs scroll display of the scrollable screen according to the normal slide operation; that, when the special slide operation has been detected by the detection section (14), the special slide operation instructing a scroll amount to reach a non-displayed state screen for display by the display section (16), out of non-displayed state screens other than a displayed state screen of the scrollable screen that is being displayed by the display section (16), displays, at the display section (16), amount identification information identifying the scroll amount instructed by the special slide operation; and that, when a screen switching condition is satisfied following on continuously from an instruction state of the special slide operation, displays, at the display section (16), a non-displayed state screen identified by the scroll amount instructed by the special slide operation.

2. The terminal device (10) of claim 1, wherein:
the special slide operation includes a first slide operation that instructs the direction of a non-displayed state screen for display by the display section (16); and
the display controller (18) displays, at the display section (16), position identification information that includes direction identification information identifying the direction instructed by the first slide operation and includes the amount identification information.

3. The terminal device (10) of claim 2, wherein the first slide operation is a slide operation that traces a path that has a pointed end portion pointing in the direction of the non-displayed state screen for display by the display section (16).

4. The terminal device (10) of claims 2 or 3, wherein:
the special slide operation includes a second slide operation performed following the first slide operation; and
the scroll amount instructed by the special slide operation is determined according to a positional separation between a start position of the second slide operation and a current position of the second slide operation.

5. The terminal device (10) of claim 4, wherein the start position of the second slide operation is at a position that has passed through a position alongside a start position of the first slide operation.

6. The terminal device (10) of claims 4 or 5, wherein the display controller (18) displays, at the display section (16), the amount identification information according to the positional separation accompanying the second slide operation.

7. The terminal device (10) of any one of claims 2 to 6, wherein the special slide operation further comprises a third slide operation that adjusts the direction instructed by the first slide operation, or a fourth slide operation that adjusts the scroll amount instructed by the second slide operation, or both.

8. The terminal device (10) of claim 7, wherein when the direction instructed by the first slide operation has been adjusted by the third slide operation, the display controller (18) displays, at the display section (16), the direction identification information according to an adjustment result, and when the scroll amount instructed by the second scroll amount has been adjusted by the fourth slide operation, the display controller (18) displays, at the display section (16), the amount identification information according to an adjustment result.

9. The terminal device (10) of any one of claims 2 to 8, wherein:
the direction identification information includes an arrow image depicting, at a position instructed by the special slide operation, an arrow with an arrowhead pointing in the direction of a non-displayed state screen; and
the amount identification information includes a bow image depicting a bow for firing the arrow, with the scroll amount expressed by a flexing amount of the bow.

10. The terminal device (10) of any one of claims 1 to 9, wherein when the screen switching condition is satisfied following on continuously from the instruction state, the display controller (18) performs jump scroll display to display, at the display section (16), a non-displayed state screen identified by the scroll amount instructed by the special slide operation.

11. The terminal device (10) of claim 9, wherein when the screen switching condition is satisfied following on continuously from the instruction state, the display controller (18) effects control to perform jump scroll display to display, at the display section (16), a non-displayed state screen identified by the scroll amount instructed by the special slide operation, and to display a target image depicting a target into which the arrow has been fired.

12. The terminal device (10) of claim 11, wherein the display controller (18) outputs a sound effect from a speaker to match a display timing of the target image.

13. The terminal device (10) of any one of claims 1 to 12, wherein the screen switching condition is a condition of, on the scrollable screen, performing a flick operation toward a direction in which a non-displayed state screen is present for display by the display section (16).

14. A screen switching method, comprising:
by a processor, detecting a normal slide operation and a special slide operation at a touch panel (12);
by a processor, when the normal slide operation is detected in a state in which a display section (16) that displays a scrollable screen is displaying the scrollable screen, performing scroll display of the scrollable screen according to the normal slide operation; when the special slide operation has been detected, the special slide operation instructing a scroll amount to reach a non-displayed state screen for display by the display section (16), out of non-displayed state screens other than a displayed state screen of the scrollable screen that is being displayed by the display section (16), displaying, at the display section (16), amount identification information identifying the scroll amount instructed by the special slide operation; and, when a screen switching condition is satisfied following on continuously from an instruction state of the special slide operation, displaying, at the display section (16), a non-displayed state screen identified by the scroll amount instructed by the special slide operation.

15. A computer-readable media carrying computer-readable instructions which, when executed by a processor, cause the processor to perform the method of claim 14.
